# EUROPEAN PATENT APPLICATION

(11) **EP 4 316 913 A1**
(43) Date of publication of application: **07.02.2024**
(21) Application number: 22787280.1
(22) Date of filing: 03.03.2022
(51) Int. Cl.: B60R 1/00

(54) **VEHICLE-MOUNTED SENSING APPARATUS AND VEHICLE**

(30) Priority: 12.04.2021 CN 202110390965
(71) Applicant: Huawei Technologies Co., Ltd., Shenzhen, Guangdong 518129 (CN)
(72) Inventor: CHEN, Yilun, Shenzhen, Guangdong 518129 (CN); LI, Shuaijun, Shenzhen, Guangdong 518129 (CN)
(74) Representative: Gill Jennings & Every LLP
(86) International application number: PCT/CN2022/078918
(87) International publication number: WO 2022/218050

(57) **Abstract**

A vehicle-mounted sensing apparatus is disclosed, including a long-distance camera, a medium-distance camera, and a short-distance camera. The long-distance camera, the medium-distance camera, and the short-distance camera all face front of a vehicle, and are configured to collect images of different fields of view. The medium-distance camera is a binocular camera, and fields of view of any two of the long-distance camera, the medium-distance camera, and the short-distance camera partially overlap. A vehicle is also disclosed.

## Description

### TECHNICAL FIELD

The present invention relates to the autonomous driving field, and in particular, to a vehicle-mounted sensing apparatus and a vehicle having a vehicle-mounted sensing apparatus.

### BACKGROUND

An autonomous driving vehicle is an intelligent vehicle that assists a driver in driving a vehicle by sensing an external environment using sensors and by utilizing artificial intelligence, or safely implements autonomous driving without driver intervention.

To improve a capability of sensing external environment of the autonomous driving vehicle, different types of sensors such as a camera, a lidar, a millimeter-wave radar, and an ultrasonic radar are usually disposed on the vehicle, to sense an environment around the vehicle. However, this sensing manner is excessively undiversified. Consequently, in some specific environments, sensors of different types cannot accurately sense the environment around the vehicle due to their own limitations. For example, in an environment with dark light such as at night, when the vehicle in motion encounters a static obstacle or a static truck, it is difficult for the vehicle to effectively sense a target object. Alternatively, in rainy, snowy, or foggy weather, it is also difficult for the vehicle to effectively sense an environment around the vehicle when the vehicle is traveling.

### SUMMARY

This application provides a vehicle-mounted sensing apparatus, to sense a target object in a plurality of manners.

To achieve the foregoing objective, a first aspect of this application provides a vehicle-mounted sensing apparatus, including a long-distance camera, a medium-distance camera, and a short-distance camera. The long-distance camera, the medium-distance camera, and the short-distance camera all face front of a vehicle, and are configured to collect images in different fields of view; and the medium-distance camera is a binocular camera, and fields of view of any two of the long-distance camera, the medium-distance camera, and the short-distance camera partially overlap. In this way, images in the front of the vehicle can be separately collected by using the long-distance camera, the medium-distance camera, and the short-distance camera, to detect a target object and extract a visual feature and position information of the target object. A depth point cloud with depth information can be collected by using the binocular camera, to obtain shape and position information of the target object. For a target object in an overlapping area of fields of view, visual features obtained by two cameras are matched with the position information, to finally obtain 3D information about a position and a shape of the target object. Therefore, sensing of the target object can be implemented in a plurality of manners. This improves a sensing capability and implements robust target object sensing.

In a possible implementation of the first aspect, the long-distance camera, the medium-distance camera, and the short-distance camera are disposed at an upper position of front windshield glass. In this way, the long-distance camera, the medium-distance camera, and the short-distance camera can be located at a high position of the vehicle, which helps increase fields of view of the long-distance camera, the medium-distance camera, and the short-distance camera, to photograph the front of the vehicle.

In a possible implementation of the first aspect, the apparatus further includes two lidars respectively disposed at two sides of a front end of the vehicle, and fields of view of the two lidars partially overlap. In this way, laser scanning can be performed on the target object by using the lidar, to obtain laser point cloud information of the target object, and a feature point of the target object is extracted to obtain a precise position of the feature point, so that the shape and the position of the target object can be detected. In this way, a new manner for sensing the target object is available. This improves the sensing capability and implements the robust target object sensing performance. In addition, the fields of view of the lidar partially overlap, and laser point clouds may be spliced and aligned in an overlapping area, to form laser point clouds that are uniformly aligned, which helps extract the feature point of the target object, to detect the shape and the position of the target object. In addition, after the laser point clouds that are uniformly aligned is formed, the laser point clouds may further be fused with the shape and position information that are of the target object and that are obtained by the long-distance camera, the medium-distance camera, and the short-distance camera. This improves sensing precision and the sensing capability for the target object and implements the robust target object sensing performance. In addition, the lidars are disposed on the front end of the vehicle, to facilitate a hidden design of the lidars, so that after being installed, the lidars meet an appearance design requirement of the vehicle and an aerodynamic design requirement.

In a possible implementation of the first aspect, the apparatus further includes three lidars, all disposed on the front of the vehicle, where one lidar is disposed on a front end of the vehicle, the other two lidars are disposed on two sides of the front of the vehicle, and the lidar in the middle separately and partially overlaps fields of view of the lidars located on the two sides. In this way, laser scanning can be performed on the target object by using the lidars, to obtain laser point cloud information of the target object, and a feature point of the target object is extracted to obtain a precise position of the feature point, so that the shape and the position of the target object can be detected. In this way, a new manner for sensing the target object is available. This improves the sensing capability and implements the robust target object sensing performance. In addition, the fields of view of the lidar partially overlap, and laser point clouds may be spliced and aligned in an overlapping area, to form laser point clouds that are uniformly aligned, which helps extract the feature point of the target object, to detect the shape and the position of the target object. In addition, after the laser point clouds that are uniformly aligned is formed, the laser point clouds may further be fused with the shape and position information that are of the target object and that are obtained by the long-distance camera, the medium-distance camera, and the short-distance camera. This improves sensing precision and the sensing capability for the target object and implements the robust target object sensing performance. In addition, the lidars are disposed on the front end of the vehicle, to facilitate a hidden design of the lidars, so that after being installed, the lidars meet an appearance design requirement of the vehicle and an aerodynamic design requirement.

In a possible implementation of the first aspect, the apparatus further includes two side-view cameras, where the two side-view cameras share an optical center and are disposed facing a side of the vehicle; and a field of view of a side-view camera close to the front of the vehicle is biased towards the front of the vehicle, a field of view of a side-view camera close to the rear of the vehicle is biased towards the rear of the vehicle, and fields of view of the two side-view cameras partially overlap. In this way, images on sides of the vehicle can be separately collected by using the two side-view cameras, to detect the target object and extract the visual feature and the position information of the target object. In addition, the two side-view cameras that share the optical center are disposed back to back, so that photographed images can be conveniently spliced, and detection can be directly performed on spliced images, so as to obtain the visual feature and the position information of the target object. This avoids a problem of missing detection when the target object transits between the fields of view of the two side-view cameras, improves the sensing capability, and implements the robust target object sensing performance.

In a possible implementation of the first aspect, the apparatus further includes four surround-view cameras respectively disposed at the front and rear of the vehicle and two sides of the vehicle, where fields of view of two adjacent surround-view cameras partially overlap. In this way, the four surround-view cameras can collect images of the front, rear, and two sides of the vehicle, and splice the images in an overlapping area of the fields of view, to form a 360° panoramic image. This can reduce a blind area of the fields of view and improve a sensing capability for the target object. In addition, the panoramic image can be further detected to obtain the visual feature and the position information of the target object. In this way, a new manner for sensing the target object is available. This improves the sensing capability and implements the robust target object sensing performance.

In a possible implementation of the first aspect, the apparatus further includes six millimeter-wave radars respectively disposed at the front, rear, and four corners of the vehicle, where fields of view of two adjacent millimeter-wave radars partially overlap. In this way, the millimeter-wave radars may be used to detect a position of a target object around the vehicle, so that a new manner for sensing the target object is available. This improves the sensing capability and implements the robust target object sensing performance.

In a possible implementation of the first aspect, the apparatus further includes a rear-view camera disposed at the rear of the vehicle, configured to collect an image at the rear of the vehicle. In this way, an image at the rear of the vehicle may be collected by using the rear-view camera, so that the target object can be detected and the visual feature and the position information of the target object can be extracted. This improves the sensing capability for the target object at the rear of the vehicle and implements the robust target object sensing performance.

In a possible implementation of the first aspect, the apparatus further includes four ultrasonic radars disposed at the rear of the vehicle, where fields of view of two adjacent ultrasonic radars partially overlap. In this way, the ultrasonic radars may be used to detect a position of a target object at the rear of the vehicle, so that a new manner for sensing the target object is available. This improves the sensing capability and implements the robust target object sensing performance.

A second aspect of this application provides a vehicle-mounted sensing apparatus, including two side-view cameras, where the two side-view cameras share an optical center and are disposed facing a side of the vehicle; and a field of view of a side-view camera close to front of a vehicle is biased towards the front of the vehicle, a field of view of a side-view camera close to rear of the vehicle is biased towards the rear of the vehicle, and fields of view of the two side-view cameras partially overlap. In this way, images on sides of the vehicle can be separately collected by using the two side-view cameras, to detect the target object and extract the visual feature and the position information of the target object. For a target object in an overlapping area of fields of view, visual features obtained by two side-view cameras are matched with the position information, to finally obtain 3D information about a position and a shape of the target object. In addition, the two side-view cameras that share the optical center are disposed back to back, so that collected images can be conveniently spliced, and detection can be directly performed on spliced images, so as to obtain the visual feature and the position information of the target object. This avoids a problem of missing detection when the target object transits between the fields of view of the two side-view cameras. Therefore, sensing of the target object can be implemented in a plurality of manners. This improves a sensing capability and implements robust target object sensing performance.

In a possible implementation of the second aspect, the field of view of the side-view camera close to the rear of the vehicle covers a part of an area of the vehicle. In this way, when the side-view camera collects the image of a side of the vehicle, the vehicle can be photographed, to avoid a blind area and a failure to sense a target object in the area.

In a possible implementation of the second aspect, the fields of view of the two side-view cameras are greater than 75°. In this way, a field of view of the side-view camera is provided, to ensure that a sufficiently large field of view can be obtained after the fields of view of the side-view cameras are spliced, to ensure that a target object located on the side of the vehicle is sensed.

As a possible implementation of the second aspect, a sum of the fields of view of the two side-view cameras is greater than or equal to 150°. In this way, a field of view formed by combining the fields of view of the two side-view cameras is provided, so that it can be ensured that the combined fields of view of the two side-view cameras can partially overlap a field of view of a front-view camera. This avoids a blind area that affects sensing of the target object.

In a possible implementation of the second aspect, the apparatus further includes two lidars respectively disposed at two sides of a front end of the vehicle, and fields of view of the two lidars partially overlap. In this way, laser scanning can be performed on the target object by using the lidar, to obtain laser point cloud information of the target object, and a feature point of the target object is extracted to obtain a precise position of the feature point, so that the shape and the position of the target object can be detected. In this way, a new manner for sensing the target object is available. This improves the sensing capability and implements the robust target object sensing performance. In addition, the fields of view of the lidar partially overlap, and laser point clouds may be spliced and aligned in an overlapping area, to form laser point clouds that are uniformly aligned, which helps extract the feature point of the target object, to detect the shape and the position of the target object. In addition, the lidars are disposed on the front end of the vehicle, to facilitate a hidden design of the lidars, so that after being installed, the lidars meet an appearance design requirement of the vehicle and an aerodynamic design requirement.

In a possible implementation of the second aspect, the apparatus further includes three lidars, all disposed on the front of the vehicle, where one lidar is disposed on a front end of the vehicle, the other two lidars are disposed on two sides of the front of the vehicle, and a lidar in the middle separately and partially overlaps fields of view of the lidars located at two sides. In this way, laser scanning can be performed on the target object by using the lidar, to obtain laser point cloud information of the target object, and a feature point of the target object is extracted to obtain a precise position of the feature point, so that the shape and the position of the target object can be detected. In this way, a new manner for sensing the target object is available. This improves the sensing capability and implements the robust target object sensing performance. In addition, the fields of view of the lidar partially overlap, and laser point clouds may be spliced and aligned in an overlapping area, to form laser point clouds that are uniformly aligned, which helps extract the feature point of the target object, to detect the shape and the position of the target object. In addition, the lidars are disposed on the front end of the vehicle, to facilitate a hidden design of the lidars, so that after being installed, the lidars meet an appearance design requirement of the vehicle and an aerodynamic design requirement.

In a possible implementation of the second aspect, the apparatus further includes four round-view cameras respectively disposed at the front and rear of the vehicle and two sides of the vehicle, where fields of view of two adjacent round-view cameras partially overlap. In this way, the four round-view cameras can collect images of the front, rear, and two sides of the vehicle, and splice the images in an overlapping area of the fields of view, to form a 360° panoramic image. This can reduce a blind area of the fields of view and improve a sensing capability for the target object. In addition, the panoramic image can be further detected to obtain the visual feature and the position information of the target object. In this way, a new manner for sensing the target object is available. This improves the sensing capability and implements the robust target object sensing performance.

In a possible implementation of the second aspect, the apparatus further includes six millimeter-wave radars respectively disposed at the front, rear, and four corners of the vehicle, where fields of view of two adjacent millimeter-wave radars partially overlap. In this way, the millimeter-wave radars may be used to detect a position of a target object around the vehicle, and prevent a blind area of a field of view. In this way, a new manner for sensing the target object is available. This improves the sensing capability and implements the robust target object sensing performance.

In a possible implementation of the second aspect, the apparatus further includes a rear-view camera disposed at the rear of the vehicle, configured to collect an image at the rear of the vehicle. In this way, an image at the rear of the vehicle may be collected by using the rear-view camera, so that the target object can be detected and the visual feature and the position information of the target object can be extracted. This improves the sensing capability for the target object at the rear of the vehicle and implements the robust target object sensing performance.

In a possible implementation of the second aspect, the apparatus further includes four ultrasonic radars disposed at the rear of the vehicle, where fields of view of two adjacent ultrasonic radars partially overlap. In this way, the ultrasonic radars may be used to detect a position of a target object at the rear of the vehicle, so that a new manner for sensing the target object is available. This improves the sensing capability and implements the robust target object sensing performance.

A third aspect of this application provides a vehicle-mounted sensing apparatus, including three lidars, all disposed on front of the vehicle, where one lidar is disposed on a front end of the vehicle, the other two lidars are disposed on two sides of the front of the vehicle, and a lidar in the middle separately and partially overlaps fields of view of the lidars located at two sides. In this way, laser scanning can be performed on the target object by using the lidar, to obtain laser point cloud information of the target object, and a feature point of the target object is extracted to obtain a precise position of the feature point, so that the shape and the position of the target object can be detected. In addition, the fields of view of the lidar partially overlap, and laser point clouds may be spliced and aligned in an overlapping area, to form laser point clouds that are uniformly aligned, which helps extract the feature point of the target object, to detect the shape and the position of the target object. In addition, the lidars are disposed on the front end of the vehicle, to facilitate a hidden design of the lidars, so that after being installed, the lidars meet an appearance design requirement of the vehicle and an aerodynamic design requirement.

A fourth aspect of this application provides a vehicle, including any possible implementation of the vehicle-mounted sensing apparatus in the first aspect, the second aspect, or the third aspect of this application. Therefore, the vehicle can sense the target object in the manner described in the first aspect, the second aspect, or the third aspect of this application.

It is clearer and easier to understand the foregoing and other aspects of the present invention in descriptions of the following (plurality of) embodiments.

### BRIEF DESCRIPTION OF DRAWINGS

The following further describes features of the present invention and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are not shown. A combination of the features shown in the accompanying drawings is not intended to limit this application. In addition, in this specification, content referred to by same reference signs is also the same. The specific accompanying drawings are described as follows:
FIG. 1 is a schematic diagram of an application scenario of a vehicle-mounted sensing apparatus according to an embodiment of this application;
FIG. 2 is a schematic diagram of distribution of cameras on a top view of a vehicle according to an embodiment of this application;
FIG. 3 is a schematic diagram of distribution of cameras in FIG. 2 on a side view of a vehicle;
FIG. 4 is a schematic diagram of distribution of cameras in FIG. 2 on a front view of a vehicle;
FIG. 5 is a schematic diagram of an FOV of a front-view camera in FIG. 2;
FIG. 6a is a schematic diagram of a common FOV of two medium-distance cameras in FIG. 2;
FIG. 6b is a schematic diagram of a common FOV of a medium-distance camera and a short-distance camera in FIG. 2;
FIG. 6c is a schematic diagram of a common FOV of a long-distance camera and a medium-distance camera in FIG. 2;
FIG. 6d is a schematic diagram of a common FOV of a long-distance camera and a short-distance camera in FIG. 2;
FIG. 7 is a partial enlarged schematic diagram of a side-view camera arrangement position in FIG. 2;
FIG. 8a is a schematic diagram of an FOV of a forward camera in FIG. 7;
FIG. 8b is a schematic diagram of an FOV of a backward camera in FIG. 7;
FIG. 8c is a schematic diagram of a common FOV of a forward camera and a backward camera;
FIG. 9 is a schematic diagram of a common FOV between a front-view camera and a forward camera in FIG. 2;
FIG. 10 is a partial enlarged schematic diagram of another side-view camera arrangement position;
FIG. 11 is a schematic diagram of an FOV of a round-view camera in FIG. 2;
FIG. 12 is a schematic diagram of a common FOV of a side-view camera and a round-view camera in FIG. 2;
FIG. 13 is a schematic diagram of a common FOV of a rear-view camera and a round-view camera in FIG. 2;
FIG. 14 is a schematic diagram of distribution of radars on a top view of a vehicle according to an embodiment of this application;
FIG. 15 is a schematic diagram of FOVs of lidars in FIG. 14;
FIG. 16 is a schematic diagram of laser point clouds detected by lidars in FIG. 14;
FIG. 17 is a schematic diagram of another distribution of lidars on a top view of a vehicle according to an embodiment of this application;
FIG. 18 is a schematic diagram of FOVs of lidars in FIG. 17;
FIG. 19 is a schematic diagram of detecting a target object in front of a vehicle by a vehicle-mounted sensing apparatus according to an embodiment of this application;
FIG. 20 is a schematic diagram of FOVs of millimeter-wave radars in FIG. 14; and
FIG. 21 is a schematic diagram of FOVs of ultrasonic radars in FIG. 14.

Reference numerals:
10: vehicle; 20: vehicle; 21: truck; 22: tricycle; 30: pedestrian; 40: stone; 50: manhole cover; 100: camera; 100a to 100i: common FOVs; 110: front-view camera; 111: long-distance camera; 112: medium-distance camera; 113: short-distance camera; 120: rear-view camera; 130: side-view camera; 131: forward camera; 132: backward camera; 140: round-view cameras; 200: radar; 200a: common FOV; 200b: common FOV; 210: lidar; 220: millimeter-wave radar; 221: long-distance millimeter-wave radar; 222: medium-distance millimeter-wave radar; 230: ultrasonic radar

### DESCRIPTION OF EMBODIMENTS

The term "include" used in this specification and claims should not be construed as being limited to the content listed below, and does not exclude other elements or steps. It should be construed as specifying existence of a mentioned feature, whole, step, or part, but does not preclude existence or addition of one or more other features, wholes, steps, or parts and their groups. Therefore, the expression "a device including an apparatus A and an apparatus B" should not be limited to a device including only components A and B.

"One embodiment" or "an embodiment" mentioned in this specification indicates that a particular feature, structure or property that is described with reference to the embodiment is included in at least one embodiment of this application. Therefore, the terms "in one embodiment" or "in an embodiment" that appear in this specification do not necessarily indicate a same embodiment, but may indicate a same embodiment. Further, in one or more embodiments, the particular features, structures, or properties can be combined in any proper manner, as will be clear from this disclosure to a person of ordinary skill in the art.

For ease of understanding, the following explains terms that may appear in embodiments of this application.

A lidar (light detection and ranging, LiDAR) detects a target by emitting a laser beam and obtains laser point cloud data by collecting a reflected beam. The lidar can capture a basic shape feature of a target object and rich local details, and has advantages of reliability and high measurement precision. Currently, the lidar is widely applied to environment sensing of an intelligent device (such as an autonomous driving vehicle, a robot, or an unmanned aerial vehicle).

A millimeter-wave radar is a radar that works in a millimeter-wave frequency band. The millimeter-wave radar sends radio waves (radar waves) and receives echoes to obtain position data of a target based on a time difference between sending and receiving. The millimeter-wave radar has advantages of a small size, a light weight, a high spatial resolution, and a strong ability to penetrate fog, smoke, and dust.

An ultrasonic radar is a radar that uses ultrasonic waves to sense.

A binocular camera has two cameras, and a depth point cloud with depth information is formed by using disparity information of the two cameras, that is, binocular vision.

Unless otherwise defined, all technical and scientific terms used in this specification have same meanings as those usually understood by a person skilled in the art of this application. In case of any inconsistency, the meaning described in this specification or the meaning obtained according to the content recorded in this specification shall prevail. In addition, the terms used in this specification are merely for the purpose of describing embodiments of this application, but are not intended to limit this application.

With the development of autonomous driving technologies, great progress has been made in terms of intelligence, economy, safety, and the like of autonomous driving. As an important standard in autonomous driving or assisted driving, safety has become one of the key research directions in the automobile industry. To improve safety of a vehicle in autonomous driving or assisted driving, the vehicle needs to effectively sense road condition information around the vehicle in a timely manner in different environments. In view of this, an embodiment of this application provides a vehicle-mounted sensing apparatus, to stably and reliably sense an environment around a vehicle, to improve safety performance of the vehicle.

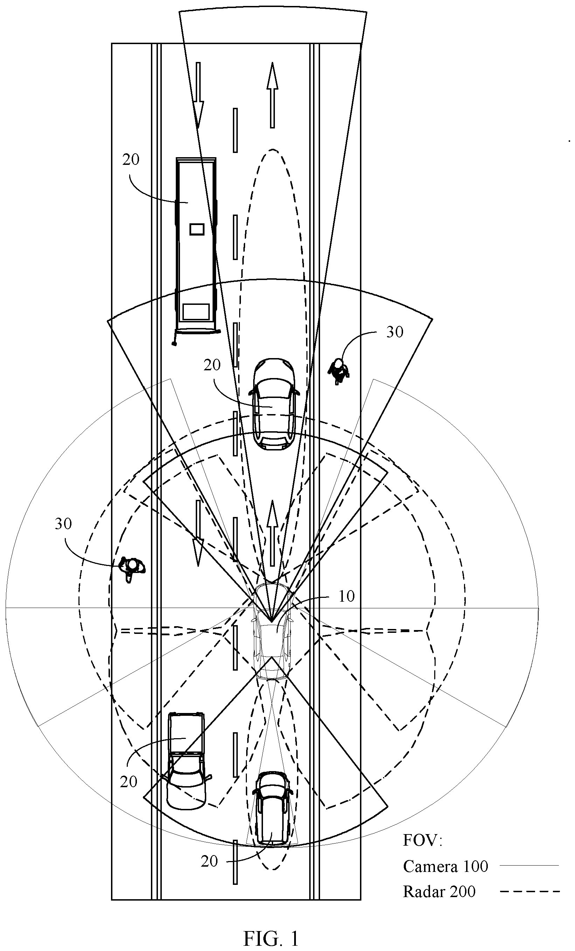

FIG. 1 is a schematic diagram of an application scenario of a vehicle-mounted sensing apparatus according to an embodiment of this application. As shown in FIG. 1, a vehicle 10 often encounters a very complex road environment when traveling. To ensure traveling safety of the vehicle 10, an embodiment of this application provides a vehicle-mounted sensing apparatus, to jointly sense road condition information around the vehicle 10 by using sensors such as cameras 100 and radars 200 that are disposed on a front end, a rear end, and left and right sides of the vehicle 10, for example, a third-party vehicle 20, a pedestrian 30, a building, and a public facility. The front end herein is a side surface of the vehicle body facing the front, and the rear end is a side surface of the vehicle body facing the rear.

The vehicle 10 in FIG. 1 should not be considered as a limitation on this embodiment of this application. The vehicle 10 may be a fuel vehicle, a new energy vehicle, or the like, or may be any one of different types of vehicles such as a truck, a passenger bus, and an SUV (sport utility vehicle, sport utility vehicle). Even the vehicle 10 may be a land transport apparatus such as a tricycle, a two-cycle, or a train that carries people or goods.

The following describes in detail the vehicle-mounted sensing apparatus in this embodiment of this application based on a type of a sensor and with reference to the accompanying drawings.

### Cameras 100

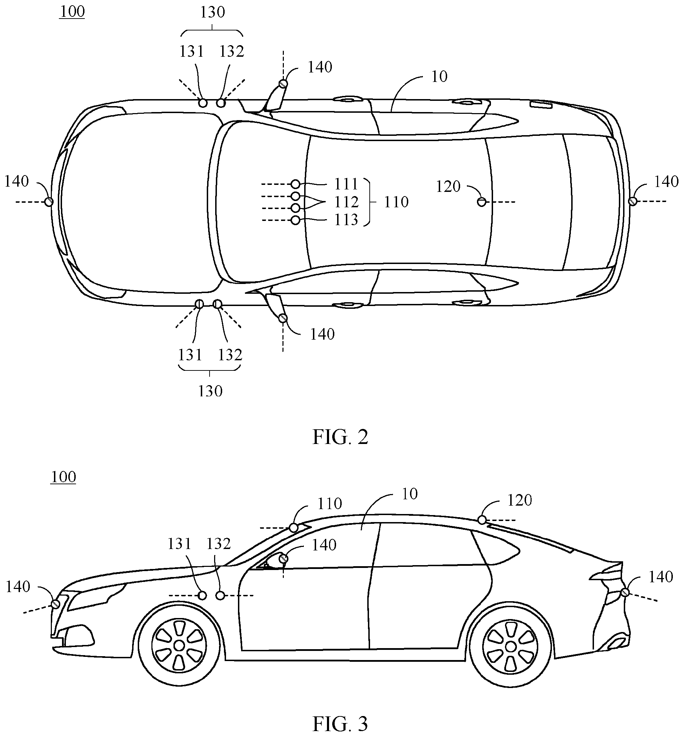

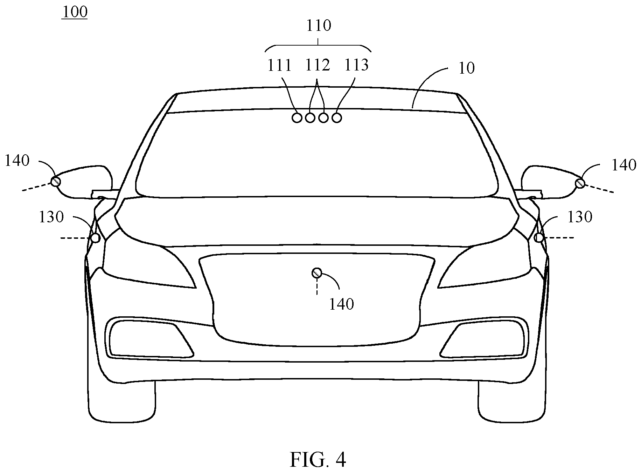

FIG. 2 is a schematic diagram of distribution of the cameras 100 on a top view of the vehicle 10 according to an embodiment of this application. FIG. 3 is a schematic diagram of distribution of the cameras 100 in FIG. 2 on a side view of the vehicle 10. FIG. 4 is a schematic diagram of distribution of the cameras 100 in FIG. 2 on a front view of the vehicle 10. As shown in FIG. 2, FIG. 3, and FIG. 4, the camera 100 includes: a front-view camera 110 configured to collect a front image of the vehicle 10, a rear-view camera 120 configured to collect a rear image of the vehicle 10, a side-view camera 130 configured to collect a side image of the vehicle 10, and a round-view camera 140 configured to collect an image around the vehicle 10. Image information around the vehicle 10 can be collected by using the front-view camera 110, the rear-view camera 120, the side-view camera 130, and the round-view camera 140, to sense position information of a target object.

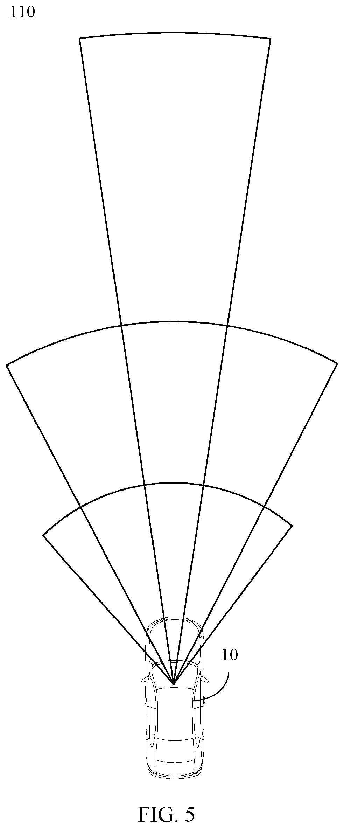

FIG. 5 is a schematic diagram of an FOV (Field Of View, field of view) of the front-view camera 110 in FIG. 2. As shown in FIG. 2, FIG. 3, FIG. 4, and FIG. 5, a center line of the FOV of the front-view camera 110 horizontally faces the front of the vehicle 10, so that the front-view camera 110 can collect an image in front of the vehicle 10. The front-view camera 110 may be disposed on an inner side of the front windshield of the vehicle 10, and is located at a middle position of an upper part of the front windshield, so that the front-view camera 110 is located at a high position. This improves the FOV of the front-view camera 110, and facilitates the front-view camera 110 to collect an image. The front-view camera 110 may include four cameras: one long-distance camera 111, two medium-distance cameras 112, and one short-distance camera 113.

FOVs, resolutions, technical specifications, and the like of the long-distance camera 111, the short-distance camera 113, and the medium-distance camera 112 are different. In a possible embodiment, the long-distance camera 111 can effectively sense a target object such as a pedestrian in a distance range of 250 m, the medium-distance camera 112 can effectively sense a target object such as a pedestrian in a distance range of 100 m, and the short-distance camera 113 can effectively sense a target object such as a pedestrian in a distance range of 60 m.

The two medium-distance cameras 112 have a same specification, to form a binocular system, and can collect an image in an FOV A depth point cloud with depth information may be formed by using disparity information of images collected in a common FOV 100a of the two medium-distance cameras 112, to detect a shape and a position of the target object. Alternatively, the two medium-distance cameras 112 may be replaced with an integrated binocular camera, so that an image can be collected to form depth point clouds, and a shape and a position of the target object can be detected.

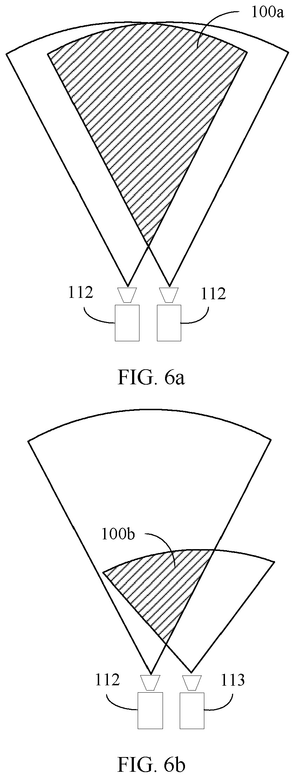

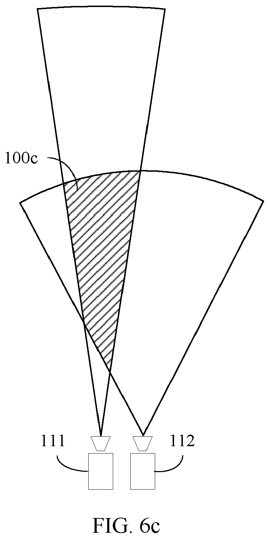

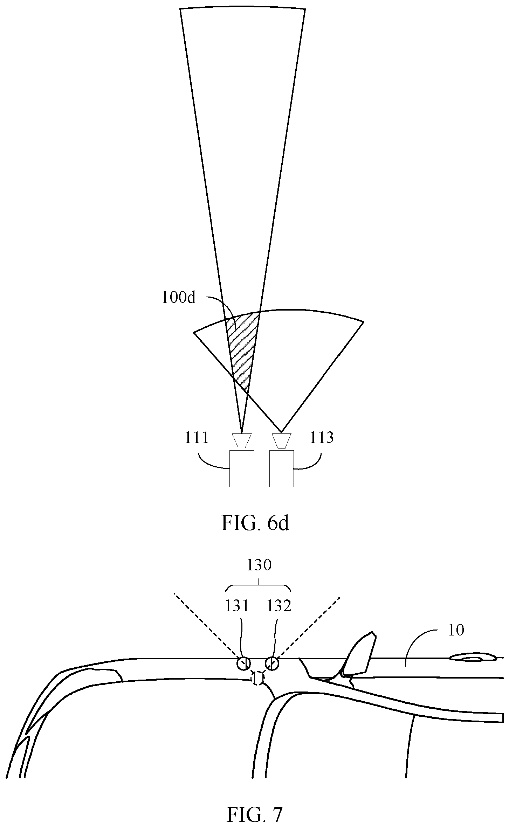

FIG. 6a is a schematic diagram of the common FOV 100a of the two medium-distance cameras 112 in FIG. 2. FIG. 6b is a schematic diagram of a common FOV 100b of the medium-distance camera 112 and the short-distance camera 113 in FIG. 2. FIG. 6c is a schematic diagram of a common FOV 100c of the long-distance camera 111 and the medium-distance camera 112 in FIG. 2. FIG. 6d is a schematic diagram of a common FOV 100d of the long-distance camera 111 and the short-distance camera 113 in FIG. 2. As shown in FIG. 6a, FIG. 6b, FIG. 6c, and FIG. 6d, the long-distance camera 111, the short-distance camera 113, and the two medium-distance cameras 112 can separately detect a target object in the FOV and extract a visual feature and position information of the target object. Some FOV areas between the long-distance camera 111, the short-distance camera 113, and the two medium-distance cameras 112 overlap to form common FOVs 100a, 100b, 100c, and 100d. For a target object in the common FOVs 100a, 100b, 100c, and 100d, visual features detected by two front-view cameras 110 may be matched with position information, to finally obtain 3D information about a position and a shape of the target object.

It can be learned from the foregoing content that, the long-distance camera 111, the short-distance camera 113, and the medium-distance camera 112 in the front-view camera 110 may separately obtain the visual feature and the position information of the target object in the FOV, and may further match the visual feature and the position information of the target object in the common FOVs 100a, 100b, 100c, and 100d, to finally obtain the 3D information about the position and the shape of the target object. Alternatively, the shape and position information of the target object may be obtained by using depth point clouds that are collected by the binocular system formed by the two medium-distance cameras 112 and that have depth information. In this way, the front-view camera 110 can sense the target object in different manners. This enhances a sensing capability of the sensing apparatus in this application and improves robustness of the sensing apparatus.

FIG. 7 is a partial enlarged schematic diagram of a side-view camera 130 arrangement position in FIG. 2. As shown in FIG. 2, FIG. 3, FIG. 4, and FIG. 7, two side-view cameras 130 are disposed on each of the left and right sides of the vehicle 10, and are respectively a forward camera 131 whose photographing direction is biased towards the front of the vehicle 10 and a backward camera 132 whose photographing direction is biased towards the rear of the vehicle 10. The forward camera 131 and the backward camera 132 may be disposed close to front-wing panels (areas around front wheels) on the left and right sides of the vehicle 10. The forward camera 131 is close to a front end of the vehicle 10, and a center line of an FOV of the forward camera 131 is kept horizontal and is inclined towards the front of the vehicle 10, to photograph an image of the front end of the vehicle 10. The backward camera 132 is close to the rear end of the vehicle 10, and a center line of an FOV of the backward camera 132 is kept horizontal and is inclined towards the rear of the vehicle 10, to photograph an image of the rear end of the vehicle 10. Therefore, the forward camera 131 and the backward camera 132 form a back-to-back photographing manner. FOVs of the forward camera 131 and the backward camera 132 partially overlap, to form the following common FOV 100e. The forward camera 131 and the backward camera 132 form the side-view camera 130 that share an optical center, that is, a virtual optical center is formed at an intersection point of an FOV center line of the forward camera 131 and the backward camera 132, so that images photographed by the front-view camera 110 and the rear-view camera 120 can be spliced in the common FOV 100e area, and a complete image greater than FOVs of the front-view camera 110 and the rear-view camera 120 is formed. An FOV angle between the forward camera 131 and the backward camera 132 may be set to be greater than 75°, and it is ensured that a sufficiently large FOV angle can be obtained after splicing is completed, to ensure a sensing range of a side part of the vehicle. The FOV angle after the splicing is completed is greater than or equal to 150°, so that the FOV after the splicing is large enough to partially overlap the FOV of the front-view camera 110, to avoid a blind area that affects sensing of the target object. Further, after the complete image is formed by splicing, detection can be directly performed on the spliced image, to obtain a visual feature and position information of the target object, to avoid missing detection when the target object transits between the FOVs of the two cameras 100.

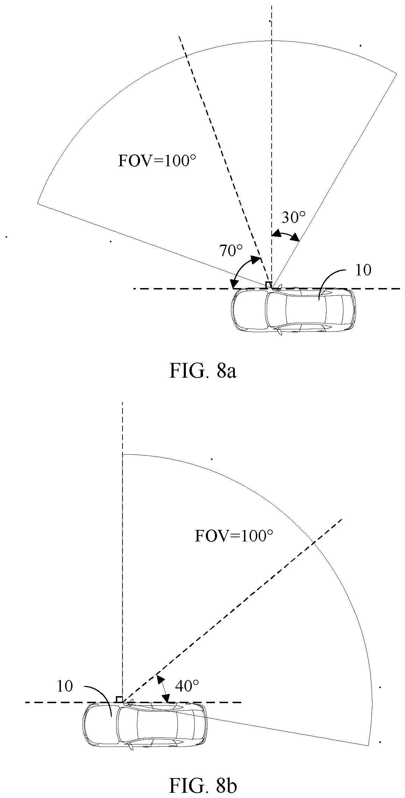

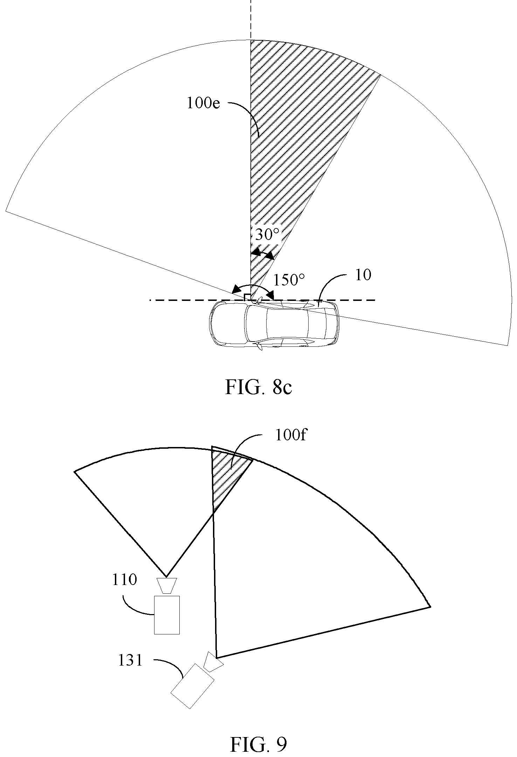

FIG. 8a is a schematic diagram of the FOV of the forward camera 131 in FIG. 7. FIG. 8b is a schematic diagram of the FOV of the backward camera 132 in FIG. 7. FIG. 8c is a schematic diagram of the common FOV 100e of the forward camera 131 and the backward camera 132. As shown in FIG. 8a, FIG. 8b, and FIG. 8c, in a possible embodiment, an FOV angle between the forward camera 131 and the backward camera 132 may be selected as 100°, an angle between an FOV center line of the forward camera 131 and a front direction of the vehicle 10 is 70°, and an angle between an FOV center line of the backward camera 132 and a rear direction of the vehicle 10 is 40°. In this way, the FOVs of the forward camera 131 and the backward camera 132 partially overlap, and a 30° common FOV 100e may be formed. In addition, an angle between the FOV center line of the backward camera 132 and the rear direction of the vehicle is 40°, which is less than an angle 50° between the FOV center line and an FOV boundary. Therefore, the FOV of the backward camera 132 covers a part of an area of the vehicle, and a coverage angle is 10°. In this way, when the backward camera 132 collects a side image of the vehicle, there can be no blind field of view in the rear direction of the vehicle. Finally, images photographed by the forward camera 131 and the backward camera 132 are spliced in the common FOV 100e area, to form an image of 150°. In this way, the side-view cameras 130 that share the optical center may be disposed to collect an image of a side of the vehicle 10, and a complete large FOV image can be formed after splicing, so that a detection range of the side-view cameras 130 can be improved.

FIG. 9 is a schematic diagram of a common FOV 100f of the front-view camera 110 and the forward camera 131 in FIG. 2. As shown in FIG. 9, FOVs of the front-view camera 110 and the forward camera 131 partially overlap, to form a common FOV 100f. Images collected by the front-view camera 110 and the forward camera 131 can be spliced in the common FOV 100f area, so that a blind area of a field of view that appears in the front direction of the vehicle 10 when the forward camera 131 collects a side image of the vehicle 10 can be eliminated. In addition, the front-view camera 110 and the forward camera 131 can separately detect a target object in the FOV and extract a visual feature and position information of the target object. For a target object in the common FOV 100f, the visual feature detected by the front-view camera 110 and the forward camera 131 may be matched with the position information, to finally obtain 3D information about a position and a shape of the target object.

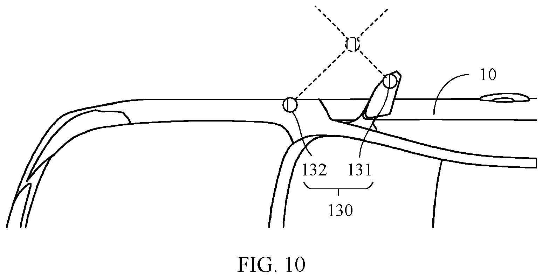

FIG. 10 is a partial enlarged schematic diagram of another side-view camera 130 arrangement position. As shown in FIG. 10, an embodiment of this application further provides another arrangement form of a side-view camera 130 with a co-optical center. Specifically, the forward camera 131 is disposed on a rear-view mirror, and a center line of an FOV of the forward camera 131 is kept horizontal and is inclined towards the front of the vehicle 10, to photograph an image of the front end of the vehicle 10. The backward camera 132 is disposed at a position close to the front-wing panel of the vehicle 10, and a center line of an FOV of the backward camera 132 is kept horizontal and is inclined towards the rear of the vehicle 10, to photograph an image of the rear end of the vehicle 10. Therefore, the forward camera 131 is located behind the backward camera 132, and the forward camera 131 and the backward camera 132 form a back-to-back photographing manner. The forward camera 131 and the backward camera 132 form a side-view camera 130 that share an optical center, that is, a virtual optical center is formed at an intersection point of an FOV center line of the forward camera 131 and the backward camera 132, so that images photographed by the front-view camera 110 and the rear-view camera 120 can be spliced in a common FOV area, and a complete image that is greater than an FOV range of the front-view camera 110 and the rear-view camera 120 is formed. In this way, detection can be directly performed on the spliced image, to obtain the visual feature and the position information of the target object. This avoids a problem of missing detection when the target object transits between FOVs of the two cameras 100.

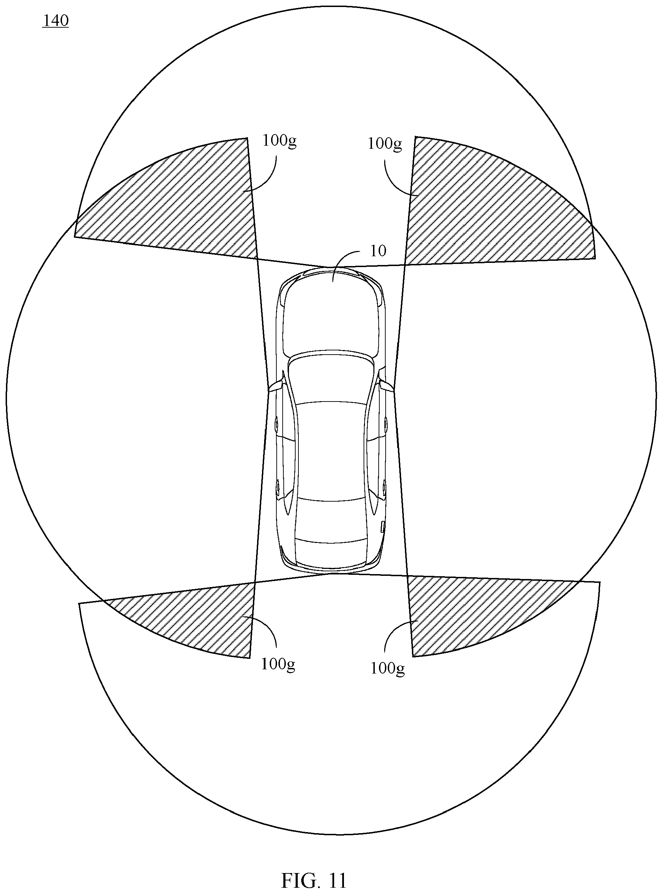

FIG. 11 is a schematic diagram of an FOV of the round-view camera 140 in FIG. 2. As shown in FIG. 2, FIG. 3, FIG. 4, and FIG. 11, the round-view camera 140 may include four fisheye cameras, and may be separately disposed in the middle of the front and rear bumpers of the vehicle 10 and on the left and right rear-view mirrors. An FOV center line of the round-view camera 140 faces four directions of the vehicle 10, namely, front, rear, left, and right, so that the round-view camera 140 can respectively collect images in the front, back, left, and right directions of the vehicle 10. The FOV center line of the round-view camera 140 is shifted towards the ground by a specific angle, so that images of the front, rear, left, and right of the vehicle 10 collected by the round-view camera 140 are closer to the vehicle 10. This reduces blind spots of image collect around the vehicle 10. In addition, FOVs of two adjacent round-view cameras 140 partially overlap, to form a common FOV 100g. Images of the front, rear, left, and right of the vehicle 10 collected by four round-view cameras 140 may be spliced in the common FOV 100g area to form a 360° panoramic image.

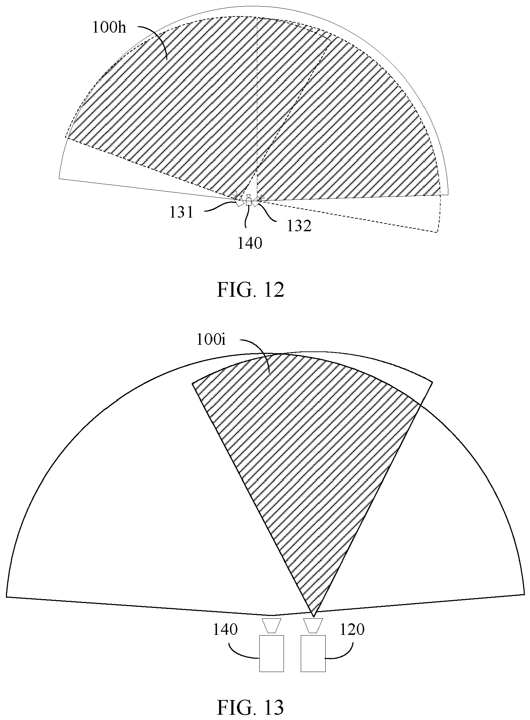

FIG. 12 is a schematic diagram of a common FOV 100h of the side-view camera 130 and the round-view camera 140 in FIG. 2. As shown in FIG. 12, the side-view camera 130 and the round-view camera 140 can separately detect a target object in the FOV, and extract a visual feature and position information of the target object. For a target object in the common FOV 100h, visual features detected by the side-view camera 130 and the round-view camera 140 may be matched with position information, to finally obtain 3D information about a position and a shape of the target object.

FIG. 13 is a schematic diagram of a common FOV 100i of the rear-view camera 120 and the round-view camera 140 in FIG. 2. As shown in FIG. 2, FIG. 3, FIG. 4, and FIG. 13, the rear-view camera 120 may be disposed at a middle position of the rear of the vehicle 10, for example, a middle position of a shark fin or a tail wing of the vehicle 10, and is configured to collect an image at the rear of the vehicle 10. FOVs of the rear-view camera 120 and the round-view camera 140 at the rear of the vehicle 10 partially overlap, to form the common FOV 100i. The rear-view camera 120 and the round-view camera 140 at the rear of the vehicle 10 can separately detect the target object in the FOV and extract a visual feature and position information of the target object. For the target object in the common FOV 100i, the visual features detected by the rear-view camera 120 and the round-view camera 140 may be matched with the position information, to finally obtain the 3D information about the position and shape of the target object.

### Radar 200

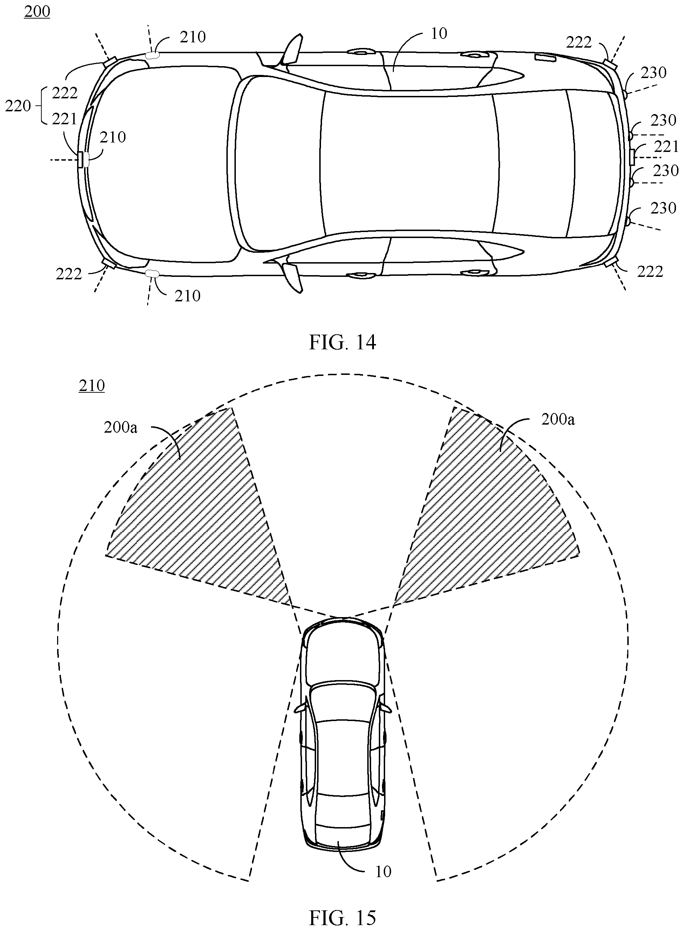

FIG. 14 is a schematic diagram of distribution of radars 200 on a top view of the vehicle 10 according to an embodiment of this application. As shown in FIG. 14, the radars 200 include a lidar 210 configured to detect the front and two sides of the vehicle 10, a millimeter-wave radar 220 configured to detect surroundings of the vehicle 10, and an ultrasonic radar 230 configured to detect the rear of the vehicle 10. A target object around the vehicle 10 is detected by using the lidar 210, the millimeter-wave radar 220, and the ultrasonic radar 230, to sense shape and position information of the target object.

As shown in FIG. 14, there may be three lidars 210. One lidar 210 is disposed on a front end of the vehicle 10, and may be located in the middle or another position of a front bumper or a grille, and is configured to detect the front of the vehicle 10. The other two lidars 210 may be disposed on two sides of the front of the vehicle 10, for example, on left and right corners of the bumper or on left and right wing panels of the front wheels of vehicle 10, and are configured to detect a side area of the vehicle 10. Herein, the front of the vehicle 10 is a front end of a vehicle body and a side part of the vehicle body adjacent to the front end of the vehicle body, for example, an area on a front end of front wheels and left and right corner areas of a front bumper. The rear of the vehicle 10 is a rear end of the vehicle body and a side part of the vehicle body adjacent to the rear end of the vehicle body, for example, an area on a rear end of rear wheels and left and right corner areas of a rear bumper. In this way, it may be convenient to perform hidden design on the lidars, so that after being installed, the lidars meet an appearance design requirement of the vehicle and aerodynamic design requirement.

In a possible embodiment, an installation height of the lidar 210 (a height between a center of the lidar 210 and the ground when the vehicle 10 is unloaded) is set to 500 mm to 700 mm. When the installation height is 500 mm, a distance measurement capability of the lidar 210 on a horizontal road surface is greater than or equal to 20 m. The lidars 210 at the left and right corners is symmetrically disposed on the vehicle 10 from left to right, and a distance between the lidars 210 at the left and right corners and the lidar 210 in the middle is less than 1500 mm.

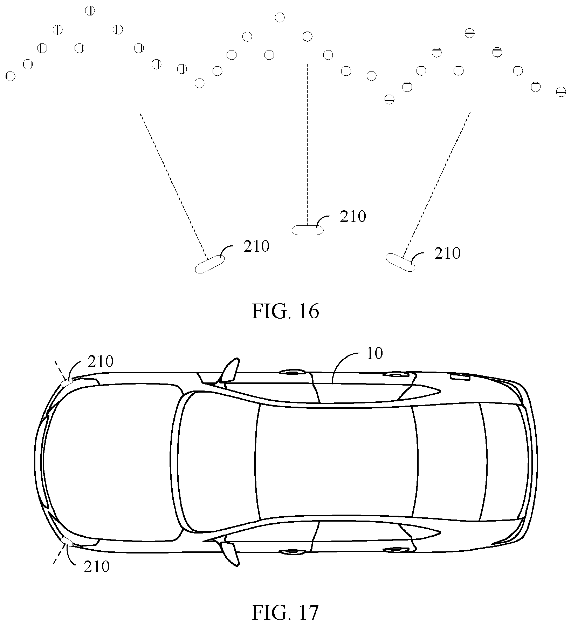

FIG. 15 is a schematic diagram of an FOV of the lidar 210 in FIG. 14. FIG. 16 is a schematic diagram of laser point clouds detected by the lidar 210 in FIG. 14. As shown in FIG. 15 and FIG. 16, the lidar 210 can perform laser scanning on a target object in the FOV, to obtain laser point cloud information of the target object, and extract feature points of the target object, to obtain precise positions of the feature points, so that a shape and a position of the target object can be detected. Between the three lidars 210, FOVs of adjacent two lidars 210 partially overlap to form a common FOV 200a. Therefore, laser point clouds detected by different lidars 210 may be spliced and aligned, to form laser point clouds that are uniformly aligned. In this way, an FOV of the lidar 210 can be increased, so that an FOV detected by the lidar 210 is greater than 180°, a blind area of the lidar 210 is reduced, and a sensing capability and robustness of the target object are improved. In addition, a case in which the lidar 210 is disposed on the top of the vehicle 10 to increase a detection range of the lidar 210 in the conventional technology cannot meet an appearance design requirement and aerodynamic design requirement of the vehicle 10 can be avoided.

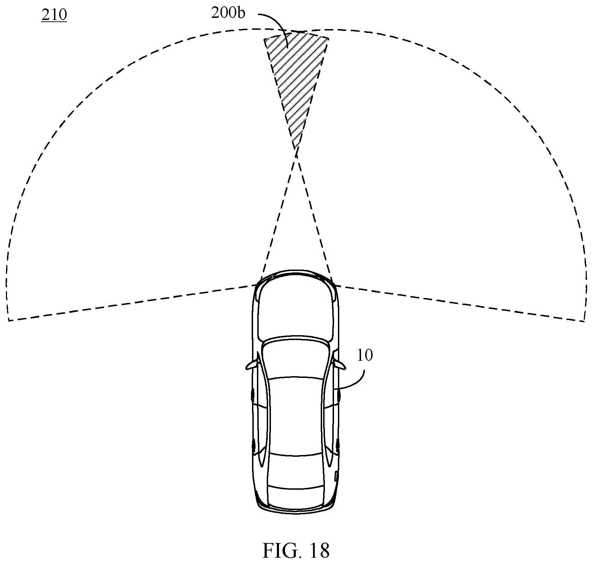

FIG. 17 is a schematic diagram of another distribution of lidars 210 on a top view of the vehicle 10 according to an embodiment of this application. FIG. 18 is a schematic diagram of FOVs of the lidars 210 in FIG. 17. As shown in FIG. 17 and FIG. 18, there may be two lidars 210, and the two lidars 210 are separately disposed at left and right corner positions of the front bumper of the vehicle 10, to detect a front area and a side area of the vehicle 10. The FOVs of the two lidars 210 partially overlap to form a common FOV 200b. Therefore, laser point clouds detected by different lidars 210 may be spliced and aligned, to form laser point clouds that are uniformly aligned. In this way, laser scanning can be performed on the front and the side of the vehicle 10 by using the two lidars 210, so that a quantity of lidars 210 can be reduced, and costs can be reduced.

Further, because both the camera 100 and the lidar 210 have respective limitations, for example, the camera 100 has a specific requirement on ambient luminance, and performance of detecting a target object by the camera 100 is greatly reduced when the luminance is poor at night. Because the lidar 210 needs to detect the target object through laser scanning, a propagation distance of the laser is greatly limited in weather such as rain or snow or heavy fog, and therefore, performance of detecting the target object by the lidar 210 is affected. According to the vehicle-mounted sensing apparatus provided in this embodiment of this application, the shape and the position of the target object can be separately detected by using the front-view camera 110 and the lidar 210. This improves robustness of sensing of the target object by the vehicle-mounted sensing apparatus in this application in different environments. Further, the position of the target object detected by the camera 100 and the precise position of the feature point of the target object detected by the lidar 210 can be aligned and fused, so that sensing precision of the target object by the vehicle-mounted sensing apparatus in this application is further improved, and robust target object sensing performance is ensured. Robust sensing of the target object can still be implemented at night, in rainy and snowy weather conditions.

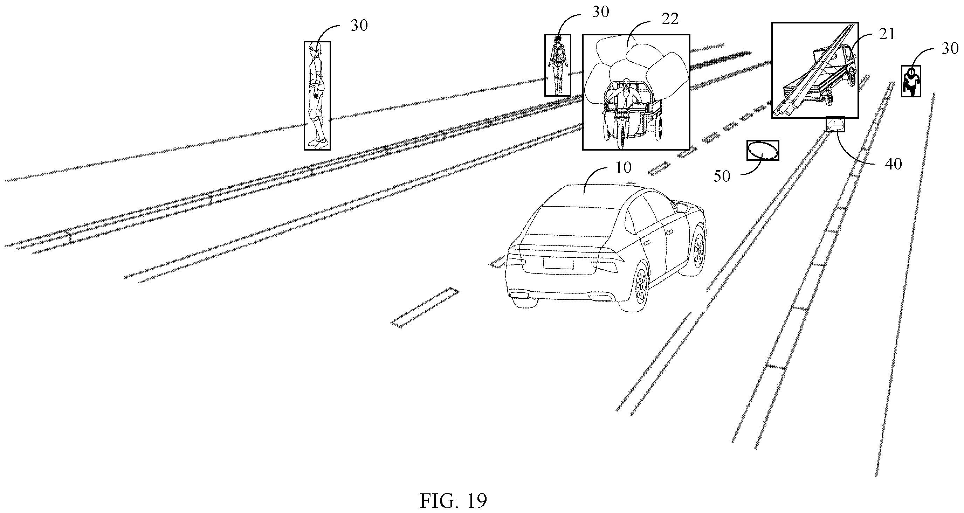

FIG. 19 is a schematic diagram of detecting a target object in front of a vehicle 10 by a vehicle-mounted sensing apparatus according to an embodiment of this application. As shown in FIG. 19, when the vehicle 10 travels on a road, the vehicle-mounted sensing apparatus in this embodiment of this application can detect target objects at different distances and positions on a road. In addition, precise sensing of an irregular vehicle (for example, a truck 21 with an extending object at rear or an overloaded tricycle 22) or an irregular obstacle (a pedestrian 30, a stone 40, or a manhole cover 50) can be further implemented by accurately sensing a shape and a position of the target object.

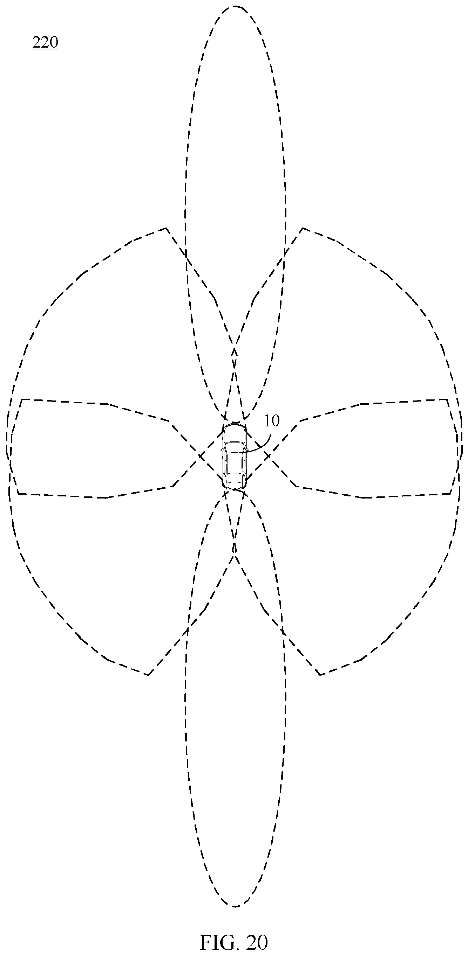

FIG. 20 is a schematic diagram of an FOV of the millimeter-wave radar 220 in FIG. 14. As shown in FIG. 14 and FIG. 20, the millimeter-wave radar 220 includes two long-distance millimeter-wave radars 221 and four medium-distance millimeter-wave radars 222. The two long-distance millimeter-wave radars 221 may be disposed at middle positions in front and rear of the vehicle 10, for example, middle positions of front and rear bumpers. The four medium-distance millimeter-wave radars 222 are disposed at four corners of the vehicle 10, for example, left and right corner positions of the front and rear bumpers. In a possible embodiment, the long-distance millimeter-wave radar 221 can detect a target object in a range of 300 m, and the medium-distance millimeter-wave radar 222 can detect a target object in a range of 70 m. In this way, the target object around the vehicle 10 can be detected by using a millimeter wave sent by the millimeter-wave radar 220. This improves a sensing capability of the vehicle-mounted sensing apparatus in this application on the target object.

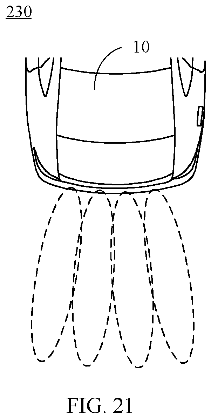

FIG. 21 is a schematic diagram of an FOV of the ultrasonic radar 230 in FIG. 14. As shown in FIG. 14 and FIG. 21, four ultrasonic radars 230 are evenly disposed on a same horizontal plane at the rear of the vehicle 10, and can send an ultrasonic wave to the rear of the vehicle 10, so that a target object at the rear of the vehicle 10 can be detected. This improves a sensing capability of the vehicle-mounted sensing apparatus in this application on the target object.

In conclusion, in this embodiment of this application, a manner in which the vehicle-mounted sensing apparatus perceives the target object includes:
1. The cameras 100 of different specifications disposed around the vehicle 10 separately detect a target object in the FOV, and extract a visual feature and position information of the target object.
2. For a target object in the common FOVs 100a to 100i, visual features detected by the two cameras 100 may be matched with position information, to finally obtain 3D information about a position and a shape of the target object.
3. The binocular system formed by the two medium-distance cameras 112 obtains depth point clouds that are of the target object and that have depth information.
4. Images on the side of the vehicle 10 are separately obtained by using the forward camera 131 and the backward camera 132 that share an optical center, and after the images are spliced, a visual feature and position information of a target object can be directly obtained.
5. Images of the front, rear, left, and right of the vehicle 10 collected by the four round-view cameras 140 are spliced to form a 360° panoramic image.
6. The lidar 210 obtains laser point cloud information of the target object, to detect a shape and a position of the target object.
7. The laser point clouds detected by the two adjacent lidars 210 are spliced and aligned, to form laser point clouds that are uniformly aligned.
8. The position of the target object detected by the camera 100 is aligned and fused with the shape and the position of the target object detected by the lidar 210.
9. The depth point clouds obtained by using the binocular system formed by the two medium-distance cameras 112 are aligned and fused with the laser point clouds detected by the lidar 210.
10. Aposition of a target object around the vehicle 10 is sensed by using the millimeter-wave radar 220.
11. A position of a target object behind the vehicle 10 is sensed by using the ultrasonic radar 230.

In this way, the vehicle-mounted sensing apparatus in this embodiment of this application can sense the position and the shape of the target object in a plurality of manners. This ensures robust target object sensing performance.

It should be noted that the foregoing are merely example embodiments of this application and used technical principles. A person skilled in the art may understand that this application is not limited to specific embodiments described herein, and a person skilled in the art may make various obvious changes, readjustments, and replacements without departing from the protection scope of this application. Therefore, although this application is described in detail with reference to the foregoing embodiments, this application is not limited to the foregoing embodiments. More other equivalent embodiments may be included without departing from the concept of this application, and all fall within the protection scope of this application.

## Claims

1. A vehicle-mounted sensing apparatus, comprising:
a long-distance camera, a medium-distance camera, and a short-distance camera, wherein the long-distance camera, the medium-distance camera, and the short-distance camera all face front of a vehicle, and are configured to collect images in different fields of view; and
the medium-distance camera is a binocular camera, and the fields of view of any two of the long-distance camera, the medium-distance camera, and the short-distance camera partially overlap.

2. The vehicle-mounted sensing apparatus according to claim 1, wherein
the long-distance camera, the medium-distance camera, and the short-distance camera are disposed at an upper position of front windshield glass.

3. The vehicle-mounted sensing apparatus according to claim 1 or 2, further comprising:
two lidars respectively disposed at two sides of a front end of the vehicle, wherein fields of view of the two lidars partially overlap.

4. The vehicle-mounted sensing apparatus according to claim 1 or 2, further comprising:
three lidars, all disposed on the front of the vehicle, wherein
one lidar is disposed on a front end of the vehicle, the other two lidars are disposed on two sides of the front of the vehicle, and the lidar in the middle separately and partially overlaps fields of view of the lidars located at two sides.

5. The vehicle-mounted sensing apparatus according to any one of claims 1 to 4, further comprising:
two side-view cameras, wherein the two side-view cameras share an optical center and are disposed facing a side of the vehicle; and
a field of view of a side-view camera close to the front of the vehicle is biased towards the front of the vehicle, a field of view of a side-view camera close to the rear of the vehicle is biased towards the rear of the vehicle, and fields of view of the two side-view cameras partially overlap.

6. The vehicle-mounted sensing apparatus according to any one of claims 1 to 5, further comprising:
four round-view cameras respectively disposed at the front and rear of the vehicle and two sides of the vehicle, wherein
fields of view of two adjacent round-view cameras partially overlap.

7. The vehicle-mounted sensing apparatus according to any one of claims 1 to 6, further comprising:
six millimeter-wave radars respectively disposed at the front, rear, and four corners of the vehicle, wherein
fields of view of two adjacent millimeter-wave radars partially overlap.

8. The vehicle-mounted sensing apparatus according to any one of claims 1 to 7, further comprising:
a rear-view camera disposed at the rear of the vehicle, configured to collect an image at the rear of the vehicle.

9. A vehicle-mounted sensing apparatus, comprising:
two side-view cameras, wherein the two side-view cameras share an optical center and are disposed facing a side of the vehicle; and
a field of view of a side-view camera close to front of a vehicle is biased towards the front of the vehicle, a field of view of a side-view camera close to rear of the vehicle is biased towards the rear of the vehicle, and fields of view of the two side-view cameras partially overlap.

10. The vehicle-mounted sensing apparatus according to claim 9, wherein
the field of view of the side-view camera close to the rear of the vehicle covers a part of an area of the vehicle.

11. The vehicle-mounted sensing apparatus according to claim 9 or 10, wherein
the fields of view of the two side-view cameras are greater than 75°.

12. The vehicle-mounted sensing apparatus according to claim 11, wherein
a sum of the fields of view of the two side-view cameras is greater than or equal to 150°.

13. The vehicle-mounted sensing apparatus according to any one of claims 9 to 12, further comprising:
two lidars respectively disposed at two sides of a front end of the vehicle, wherein fields of view of the two lidars partially overlap.

14. The vehicle-mounted sensing apparatus according to any one of claims 9 to 12, further comprising:
three lidars, all disposed on the front of the vehicle, wherein
one lidar is disposed on a front end of the vehicle, the other two lidars are disposed on two sides of the front of the vehicle, and a lidar in the middle separately and partially overlaps fields of view of the lidars located at two sides.

15. The vehicle-mounted sensing apparatus according to any one of claims 9 to 14, further comprising:
four round-view cameras respectively disposed at the front and rear of the vehicle and two sides of the vehicle, wherein
fields of view of two adjacent round-view cameras partially overlap.

16. The vehicle-mounted sensing apparatus according to any one of claims 9 to 15, further comprising:
six millimeter-wave radars respectively disposed at the front, rear, and four corners of the vehicle, wherein
fields of view of two adjacent millimeter-wave radars partially overlap.

17. The vehicle-mounted sensing apparatus according to any one of claims 9 to 16, further comprising:
a rear-view camera disposed at the rear of the vehicle, configured to collect an image at the rear of the vehicle.

18. A vehicle, comprising the vehicle-mounted sensing apparatus according to any one of claims 1 to 17.
